# EUROPÄISCHE PATENTSCHRIFT

(11) **EP 1 709 837 B1**
(45) Veröffentlichungstag und Bekanntmachung des Hinweises auf die Patenterteilung: **02.01.2008**
(21) Anmeldenummer: 05701504.2
(22) Anmeldetag: 13.01.2005
(51) Int. Cl.: H05B 6/16, H05B 6/36

(54) **VORRICHTUNG ZUM ERWÄRMEN VON SPEISEN MITTELS INDUKTIVER KOPPLUNG UND VORRICHTUNG ZUR BERTRAGUNG VON ENERGIE**
DEVICE FOR WARMING FOOD BY MEANS OF INDUCTIVE COUPLING AND DEVICE FOR TRANSFERRING ENERGY
DISPOSITIF POUR RECHAUFFER DES PLATS PAR COUPLAGE INDUCTIF ET DISPOSITIF DE TRANSFERT D'ENERGIE

(30) Priorität: 21.01.2004 DE 102004003119
(43) Veröffentlichungstag der Anmeldung: 11.10.2006
(73) Patentinhaber: BSH Bosch und Siemens Hausgeräte GmbH, 81739 München (DE)
(72) Erfinder: ECKHARD, Wolfgang, 81379 München (DE); NEUMAYER, Dan, 83233 Bernau (DE); SCHNELL, Wolfgang, 83308 Trostberg (DE); ZSCHAU, Günter, 83301 Traunreut (DE)
(86) Internationale Anmeldenummer: PCT/EP2005/050118
(87) Internationale Veröffentlichungsnummer: WO 2005/072013

(56) Entgegenhaltungen:
- EP-A- 0 637 898
- US-A- 5 808 281
- US-A- 6 091 063

## Beschreibung

Die Erfindung betrifft eine Vorrichtung, in der Speisen mittels induktiver Kopplung erwärmbar sind, nach dem Oberbegriff des Anspruches 1 sowie eine Vorrichtung zur Übertragung von Energie nach dem Oberbegriff des Anspruches 2.

Aus dem Stand der Technik sind Vorrichtungen bekannt, die mit einer induktiven Kochstellenbeheizung für Kochbehältnisse arbeiten. Hierbei weist die Kochstellenbeiheizung innerhalb der Kochplatte eine Induktionsspule auf, die von einem hochfrequenten Wechselstrom durchflossen wird. Dieser Wechselstrom verursacht ein sich schnell änderndes Magnetfeld, das in Richtung des Behältnisses geleitet wird. Innerhalb des Bodens des Behältnisses, der ferromagnetisch ausgebildet ist, verursacht das magnetische Wechselfeld eine elektrische Spannung, wodurch wiederum ein Wirbelstrom (Induktionsstrom) entsteht, der eine Erwärmung des Topfbodens bewirkt. Einer der Vorteile derartiger induktiver Kochstellenbeheizungen ist, dass lediglich der Topfboden und keine anderen energiespeichernden Teile wie beispielsweise die Kochplatte aufgeheizt werden. Somit kann der Benutzer sich an der Kochplatte nicht verbrennen.

Aus der DE 42 24 405 A1 ist eine derartige induktive Kochstellenbeheizung beschrieben, die unterhalb einer Kochplatte, insbesondere einer Glaskeramikplatte, angeordnet ist und aus einer zusammenhängenden, in einer Schale angeordneten Baueinheit besteht, die zwei Induktionsspulen enthält. Die Induktionsspulen sind flachscheibenförmig ausgebildet und stützen sich über einer thermischen Isolation an der Unterseite der Glaskeramikplatte sowie über eine Ferritplatte an einem Kühlkörper ab. Einer der Nachteile derartiger induktiver Kochstellenbeheizungen ist, dass der Wirkungsgrad durch entstehende Streuverluste des elektrischen Magnetfeldes negativ beeinflusst wird. Weitere Verluste entstehen beim Durchgang des Magnetfeldes durch die Kochplatte, so dass bekannte induktive Kochstellenbeheizungen einen Wirkungsgrad von circa maximal 60% erreichen können.

Aus der DE 100 31 167 A1 ist eine Anordnung zum Garen von Speisen bekannt, die ein Kochfeld mit einer Kochzone aufweist, der ein erstes Heizelement zugeordnet ist. Ein von dem ersten Heizelement beheizbares Gargerät ist auf der Kochzone abstellbar, wobei das Gargerät ein zweites Heizelement umfasst. Hierbei ist am Kochfeld ein elektrischer Anschluss vorgesehen, an den das Gargerät mit dem zweiten Heizelement anschließbar ist. Der Vorteil dieser Anordnung ist, dass das Gargerät direkt durch eine "aktive Heizung " beheizbar ist, welches sich positiv bezüglich des Wirkungsgrades auswirkt. Nachteilig ist jedoch, dass das zweite Heizelement über ein Kabel mit dem elektrischen Anschluss verbunden ist. Das vom Gargerät ausgehend in Richtung Anschluss verlaufende Kabel kann für den Benutzer während des Garens von Speisen störend sein, insbesondere kann der Benutzer bei einer etwaigen nicht achtsamen Bewegung am Kabel hängen bleiben mit der Folge, dass das Gargerät kippen kann.

Aus der US 4,996,405 ist eine Vorrichtung bekannt, bei der in einem Bodenelement eine aus einem Stromleiter geformte sekundäre Wicklung und ein an der Wicklung angeschlossenes Heizelement angeordnet sind. Die Energie für das Heizelement wird von einer primären Wicklung, die in einer Vorrichtung zur Übertragung von Energie angeordnet ist, mittels Induktion auf die sekundäre Wicklung übertragen. Einer der Nachteile ist, dass diese Vorrichtungen relativ großvolumig sind, wodurch eine Anordnung der Vorrichtung in dem Bodenelement eines Topfes zu einem großvolumigen Topf führt. Weiterhin ist in der EP 0 637 898 A1 ein Arbeitsplattenkochfeld beschrieben, wobei die in eine Küchenauflage aus Stein eine Auffräsung von unten vorgesehen wird, in der eine Induktionsspule mit Abschirmung und eine Glimmerplatte mittels eines wärmebeständigen Vergussmittels zur Stabilisierung des Steins angebracht werden. Ein Nachteil dieses Arbeitsplattenkochfeldes besteht darin, dass sich bei Erwärmung des Vergussmittels dieses in der Ausfräsung ausdehnt und gegebenenfalls zur Beschädigung der Steinplatte führt. Zu diesem Zweck muss entweder eine mechanische Stabilisierung der Steinplatte mittels einer Gewindestange oder die Ausführung der Steinplatte als Sandwich-Platte mit einer Carbonfaser-Kunststoffplatte erfolgen. Beide Arten der Stabilisierung sind aufwändig.

Es ist Aufgabe der vorliegenden Erfindung Vorrichtungen bereitzustellen, mit denen die oben genannten Nachteile vermieden werden, insbesondere ein guter Wirkungsgrad bei der Erwärmung von Speisen erzielbar ist.

Die auf die Vorrichtung zum Erwärmen von Speisen gerichtete Aufgabe wird erfindungsgemäß durch die Merkmale des Patentanspruches 4 sowie 5 gelöst. Die auf die Vorrichtung zur Übertragung von Energie gerichtete Aufgabe wird erfindungsgemäß durch die Merkmale des Patentanspruches 1 sowie 3 gelöst. Vorteilhafte Ausgestaltungen und Weiterbildungen dieser Erfindung sind den Unteransprüchen zu entnehmen.

Gemäß der Vorrichtung zum Erwärmen von Speisen, die beispielsweise in einem Bodenbereich eines zu erwärmenden Behältnis angeordnet sein kann, wird erfindungsgemäß vorgeschlagen, dass die sekundäre Wicklung in einem Wicklungskörper durch ein Vergussmittel eingegossen ist und das isolierende Vergussmittel einen thermischen Ausdehnungskoeffizienten besitzt, der im Wesentlichen dem des Wicklungskörpers entspricht. Hinsichtlich der Vorrichtung zur Übertragung von Energie, die in einer Ausführungsform der Erfindung in einer Kochplatte angeordnet sein kann, ist die primäre Wicklung in einem Wicklungskörper durch ein Vergussmittel eingegossen. Das isolierende Vergussmittel weist hierbei einen thermischen Ausdehnungskoeffizienten auf, der dem des Wicklungskörpers entspricht. Bei abgestelltem Behältnis auf der Kochplatte bildet die Anordnung einen Transformator mit zwei Transformatorhälften. Die eine Hälfte - die primäre Wicklung mit Wicklungskörper und Vergussmittel - ist in der Kochplatte und die zweite Hälfte- die sekundäre Wicklung mit Wicklungskörper und Vergussmittel - ist in dem Behältnis angeordnet. Wird an der primären Wicklung, die als Induktionsspule wirkt, eine Spannung angelegt, erzeugt diese einen magnetischen Fluss, der in Richtung der sekundären Wicklung fließt. Die primäre Wicklung wird hierbei von einem hochfrequenten Wechselstrom durchflossen, wobei über eine elektronische Schaltung die Energiezufuhr sehr fein dosiert werden kann. Aufgrund des Wicklungskörpers, der vorzugsweise aus Ferrit besteht - einem Werkstoff aus elektrisch nicht leitenden Metalloxiden -, wird ein guter Energieübertrag von der primären in die sekundäre Wicklung erreicht. Der Wicklungskörper bewirkt, dass der magnetische Fluss präzise in die sekundäre Wicklung geführt wird, wodurch wenige Streuverluste bezüglich des Magnetfeldes entstehen, welches mit einem verbesserten Wirkungsgrad verbunden ist. Ferner kann über eine kleine Bauform eine hohe Energieübertragung erreicht werden.

In der sekundären Wicklung wird der magnetische Fluss in elektrische Energie umgewandelt, insbesondere eine Spannung induziert. Die sekundäre Wicklung stellt somit einen stromdurchflossenen Leiter dar, der vorteilhafterweise nicht mit einem elektrischen Anschluss über Kontaktstellen verbunden werden muss. Aufgrund der in der sekundären Wicklung induzierten Spannung wird das Heizelement erwärmt.

Während des Betriebes der erfindungsgemäßen Vorrichtungen erwärmen sich die primäre und die sekundäre Wicklung, die beispielsweise in einer Ausnehmung des Wicklungskörpers angeordnet sein können, wobei die Vergussmasse die Wärme aufnimmt. Die Vergussmasse ist vorzugsweise temperaturbeständig und kann beispielsweise Epoxydharz oder Polyamid umfassen. In diesem Zusammenhang ist es besonders wichtig, dass der Ausdehnungskoeffizient des die Wärme aufnehmenden Vergussmittels dem des Wicklungskörpers angepasst ist. Hierdurch wird erreicht, dass aufgrund der entstehenden Wärme während des Betriebes beider Vorrichtungen der Wicklungskörper sowie das Vergussmittel sich gleichmäßig ausdehnen können, ohne dass beispielsweise mechanische Spannungen im Bereich der Ausnehmungen entstehen. Die Anpassung des thermischen Ausdehnungskoeffizienten kann zum Beispiel durch die Zugabe von Füllstoffen in das Vergussmittel erzielt werden.

In einer weiteren vorteilhaften Ausgestaltung der Erfindung ist auf dem Wicklungskörper eine nicht elektrisch leitende Schutzschicht mit einer geringen Dicke angeordnet, die einen thermischen Ausdehnungskoeffizienten besitzt, der ebenfalls im Wesentlichen dem des Wicklungskörpers entspricht. Befindet sich das aufzuwärmende Behältnis auf der Kochplatte, liegen beide Schutzschichten aufeinander. Vorzugsweise ist die Dicke der jeweiligen Schutzschicht maximal 500µm, so dass während der Übertragung des magnetischen Feldes von der primären in die sekundäre Wicklung möglichst wenig Verluste entstehen. Aufgrund der geringen Dicke der Schutzschicht ist es von Vorteil, dass neben dem thermischen Ausdehnungskoeffizienten des Vergussmittels auch der thermische Ausdehnungskoeffizient der Schutzschicht dem des Wicklungskörpers angepasst ist. Während der Übertragung der Energie in die sekundäre Wicklung dehnen sich das Vergussmittel, der Wicklungskörper sowie die Schutzschicht gleichmäßig aus, ohne dass die aufgrund der geringen Dicke ausgebildete Schutzschicht beispielweise durch entstehende Wärmespannungen beschädigt wird. Vorzugsweise ist der thermische Ausdehnungskoeffizient der Schutzschicht und/oder des Vergussmittels dem thermischen Ausdehnungskoeffizienten des Wicklungskörpers für einen Temperaturbereich von -20°C bis 150°C angepasst.

Zweckmäßigerweise weist die auf dem Wicklungskörper angeordnete Schutzschicht eine hohe Werkstoffhärte auf. Eine derartige Ausbildung der Schutzschicht bietet sich vorzugsweise auf der Vorrichtung zur Übertragung von Energie beziehungsweise auf der Kochplatte an, da diese aufgrund des häufigen Abstellens von Behältnissen schnell zu Verkratzungen neigt. Da die Schutzschicht sehr dünn ausgebildet ist, ist es von Vorteil, diese mit einer besonders hohen Härte auszugestalten. In einer Ausführungsform der Erfindung kann die Schutzschicht eine amorphe Kohlenwasserstoffschicht (a-C:H Schicht) sein. Die a-C:H Schicht kann hierbei durch Hochfrequenzentladungen, Magnetosputtern, lonenstrahlverfahren, Aufdampfen oder durch ein plasmaunterstütztes Abscheidungsverfahren (CVD-Verfahren) auf den Wicklungskörper aufgebracht werden. Hinsichtlich des CVD-Verfahren wird unter der Verwendung von Kohlenwasserstoffgasen (z.B. Acetylen) dabei in einer Vakuumkammer ein Argon-Plasma gezündet, wobei die Moleküle des Reaktivgases in unterschiedliche Spaltprodukte fragmentiert werden. Aus dieser chemischen Dampfphase polymerisieren schließlich kondensierbare Kohlenwasserstoffe auf der jeweiligen Bauteiloberfläche (Wicklungskörper) zu einer diamantähnlichen Schicht. So erhält die Oberfläche des Wicklungskörpers diamantähnliche Eigenschaften. Bei einer Schichtdicke von bereits circa 3µm kann die amorphe Kohlenwasserstoffschicht Härten von bis zu 3500 HV (Vickershärte) erreichen, also mehr als hochgehärtete Stähle. Der wesentliche Vorteil dieser Schicht ist des Weiteren, dass trotz ihrer extremen Härte diese in der Lage ist, bei hohen Belastungen Energie durch elastische Verformung aufzunehmen. Durch eine derartige Kombination von Härte und Elastizität wird eine sehr gute Verschleißfestigkeit der Oberfläche des Wicklungskörpers erzielt.

Hinsichtlich des zu erwärmenden Behältnisses ist eine Ausbildung der Schutzschicht als Hartschicht nicht unbedingt erforderlich, da in der Regel größere mechanische Kräfte auf die Kochplatte als auf den. Behältnisboden einwirken. Aufgrund der geringeren Verkratzneigung des Behältnisses reicht es aus, die Schutzschicht lediglich dünn und nicht elektrisch leitend auszubilden. Eine Möglichkeit der Erfindung ist hierbei, die Schutzschicht als Folie auszugestalten, die am Wicklungskörper anliegt. Die Schutzschicht kann beispielweise Keramik oder Polytetrafluoroethylen (PTFE) umfassen. Selbstverständlich ist es in einer weiteren Alternative möglich, die Schutzschicht ebenfalls als Hartschicht, insbesondere als a-C:H Schicht, auszugestalten.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen

Figur 1 eine schematische Schnittdarstellung eines Behältnisses, in dem Speisen mittels Induktion erwärmbar sind und

Figur 2 eine schematische Schnittdarstellung einer Kochplatte, die Energie in das Behältnis nach Figur 1 überträgt.

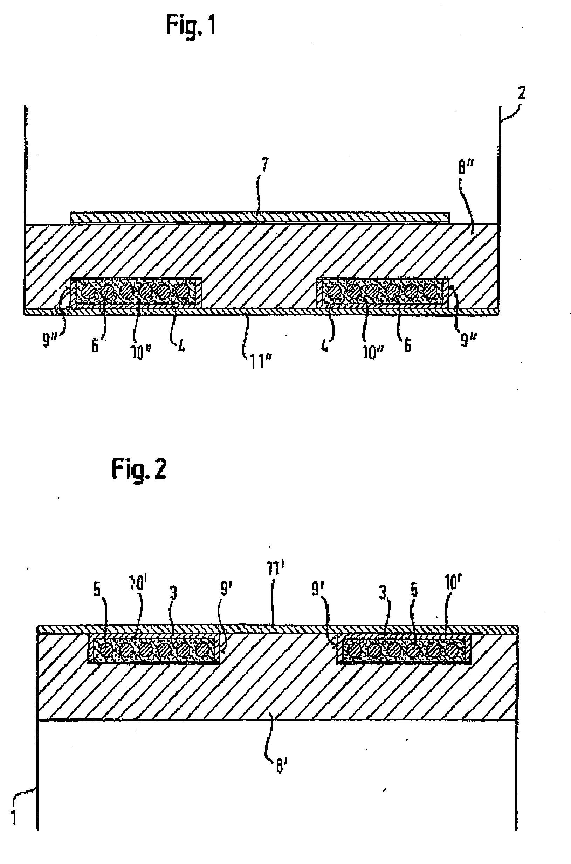

Figur 1 zeigt ein Behältnis 2 mit einem Boden, in dem ein Wicklungskörper 8" angeordnet ist. Der Wicklungskörper 8" besteht aus einen Ferrit, der im dargestellten Ausführungsbeispiel eine Ausnehmung 9" aufweist. In der Ausnehmung 9", die im Querschnitt eine rechteckige Form (Nut) aufweist, ist eine aus einem Stromleiter geformte sekundäre Wicklung 6 angeordnet. Die sekundäre Wicklung 6 wirkt als Induktionsspule und setzt sich aus mehreren Litzen zusammen, die aus Einzelleitern aufgebaut sind, welches in den Figuren nicht explizit dargestellt ist. Die aus Kupfer bestehenden Einzelleiter können vorzugsweise durch eine wärmebeständige Lackschicht elektrisch gegeneinander isoliert sein. Die sekundäre Wicklung 6 ist in der Ausnehmung 9" durch ein elektrisch isolierendes Vergussmittel 10" eingegossen, das im vorliegenden Beispiel Epoxydharz ist, in dem zusätzlich Füllstoffe aus Keramik eingebunden sind. Als Vergussmittel 10" ist ebenfalls Polyamid unter Zusatz von Füllstoffen verwendbar.

Auf der Unterseite des Wicklungskörpers 8" ist eine Schutzschicht 11" angeordnet, die im dargestellten Ausführungsbeispiel eine geringe Dicke von ungefähr 100µm aufweist. Die Schutzschicht 11" ist nicht elektrisch leitend und als Folie ausgebildet. Die Folie 11" ist auf der Unterseite des Wicklungskörpers 8" aufgeklebt und enthält Keramik. In einer weiteren Ausführungsform der Erfindung kann die Folie 11" auch aus Polytetrafluoroethylen oder aus einem anderen Kunststoff bestehen. Eine Aufbringung der Folie 11" durch ein Auflamieren ist ebenfalls möglich. Die Ausnehmung 9" ist somit zum einen durch den Wicklungskörper 8" und zum anderen zu einer Seite durch die Schutzschicht 11" begrenzt.

Auf der Oberseite des Wicklungskörper 8", das heißt auf der der sekundären Wicklung 6 abgewandten Seite des Wicklungskörpers 8", ist ein Heizelement 7 angeordnet. Das Heizelement 7, däs mit der sekundären Wicklung 6 verbunden ist, besteht aus einem nicht dargestellten Heizleiter, der als Widerstandsheizung arbeitet. Der Heizleiter ist über zwei Kontaktstellen mit der sekundären Wicklung 6 verbunden. Das Heizelement 7 kann beispielsweise als ein Porzellan Emailiertes Metallschicht System ausgestaltet sein, auf der der Heizleiter aufgebracht ist. In einer weiteren Alternative der Erfindung ist es möglich, mehrere Heizleiter mit der sekundären Wicklung 6 zu verbinden. Der Heizleiter ist gleichmäßig über die gesamte Fläche des Heizelementes 7 verteilt, so dass eine gleichmäßige Erwärmung des Heizelementes 7 erzielbar ist. Der Heizleiter kann beispielsweise einen mäanderförmigen oder einen bifilar spiralförmigen Verlauf aufweisen. Oberhalb des Heizelementes 7 befindet sich das Gut (nicht dargestellt), welches durch die vom Heizleiter erzeugte Wärme erwärmt werden kann. Damit möglichst wenig Wärme während der Erwärmung des Gutes verloren geht, kann zwischen dem Heizelement 7 und der sekundären Wicklung 6 eine Wärmeisolierung angeordnet sein. Hierdurch wird erreicht, dass möglichst der gesamte Wärmestrom vom Heizelement 7 nach oben, das heißt in entgegengesetzte Richtung zur sekundären Wicklung 6, geleitet wird, so dass das Gut effizient erwärmt werden kann. Die Wärmeisolierung kann beispielsweise Vermiculit aufweisen, das sich durch eine sehr geringe Wärmeleitfähigkeit auszeichnet. Vermiculit ist mechanisch stabil und weist eine hohe Temperaturbeständigkeit bis ca. 1000°C auf. Die Wärmeisolierung bewirkt des Weiteren, dass die sekundäre Wicklung 6 nicht durch die aus dem Heizelement 7 entstehende Wärme unnötig erhitzt wird, wodurch die sekundäre Wicklung 6 beschädigt oder sogar vollständig ausfallen könnte.

Figur 2 zeigt eine Vorrichtung 1 zur Übertragung von Energie, die als Kochplatte 1 ausgebildet ist. Die Kochplatte 1 weist einen Wicklungskörper 8' auf, der im Wesentlichen spiegelsymmetrisch zum Wicklungskörper 8" des zu erwärmenden Behältnisses 2 ausgebildet ist. Der aus Ferrit bestehende Wicklungskörper 8' weist ebenfalls eine Ausnehmung 9' auf, in der eine mit einer nicht dargestellten Spannungsquelle verbundene primäre-Wicklung 5 angeordnefist:-Die-prirüäre-Wicklung 5 ist durch ein isolierendes Vergussmittel 10' umgeben. Auf dem Wicklungskörper 8' ist eine Schutzschicht 11' angeordnet. Die weitere Ausgestaltung der Kochplatte 1, insbesondere des Vergussmittels 10', des Wicklungskörpers 8' sowie der primären Wicklung 6 entspricht dem Vergussmittel 10", dem Wicklungskörper 8" und der sekundären Wicklung 6 des Behältnisses 2, so dass zwecks Vermeidung von Wiederholungen hiermit lediglich darauf verwiesen wird.

Die Schutzschicht 11' der Kochplatte 1 weist eine hohe Werkstoffhärte auf, welche durch eine amorphe Kohlenwasserstoffschicht erreicht wird. Neben ihrer geringen Dicke von circa 100µm und ihrer nicht elektrisch leitenden Eigenschaft zeichnet sich die Schutzschicht 11' durch ihre besonders hohe Härte aus, so dass ein Verkratzen der Kochplatte 1 weitestgehend vermieden wird.

Das Vergussmittel 10',10", das in der Ausnehmung 9',9" des rotationssymmetrisch ausgebildeten Wicklungskörpers 8',8" der Kochplatte 1 beziehungsweise des Behältnisses 2 enthalten ist, weist im vorliegenden Ausführungsbeispiel am Rand, das bedeutet zum Wicklungskörper 8',8" sowie zur Schutzschicht 11',11" hin, einen Rahmen 3,4 auf, der ebenfalls aus Epoxydharz besteht. Der Rahmen 3,4 dient hierbei als Hilfsmittel bei der Montage, bei der zunächst die primäre beziehungsweise die sekundäre Wicklung 5,6 in den zu einer Seite offenen Rahmen 3,4 geführt wird und anschließend das Epoxydharz 10',10" eingegossen wird. Im Anschluss wird der offene Rahmen 3,4 durch eine ebenfalls aus Epoxydharz bestehende Abdeckung geschlossen. Die Einheit aus Vergussmittel 10', 10" und primärer und sekundärer Wicklung 5,6 kann daraufhin in die Ausnehmung 9',9" des Wicklungskörpers 8',8" eingelegt werden.

In einer weiteren Ausführungsform besteht ebenfalls die Möglichkeit eine Anordnung der primären und sekundären Wicklung 5,6 in den Wicklungskörpers 8',8" ohne Rahmen 3,4 zu realisieren. Bei dieser Alternative bietet es sich an, die primäre und sekundäre Wicklung 5,6 in die Ausnehmung 9',9" zu führen und anschließend in die Ausnehmung 9',9" lediglich das isolierende Vergussmittel 10',10" einzugießen.

Ist das Behältnis 2 auf der Kochplatte 1 abgestellt, liegen beide Schutzschichten 11',11" aufeinander. Bei angelegter Spannung erzeugt die primäre Wicklung 5 einen magnetischen Fluss, der in Richtung der sekundären Wicklung 6 geleitet wird. Der aus Ferrit bestehende Wicklungskörper 8',8", der einen hohen elektrischen Widerstand aufweist, sowie seine Geometrie begünstigen hierbei die Führung des magnetischen Flusses in Richtung des Behältnisbodens. In der sekundären Wicklung 6 wird der magnetische Fluss in elektrische Energie umgewandelt, wobei die sekundäre Wicklung 6 einen stromdurchflossenen Leiter darstellt. Das Heizelement 7 mit seinem Heizleiter, das mit der sekundären Wicklung 6 verbunden ist, wird gleichzeitig mit Strom durchflossen, so dass sich der Behältnisboden erwärmt.

Die erfindungsgemäßen Vorrichtung 1,2 weisen einen hohen Wirkungsgrad auf, der erheblich höher ist als handelsübliche induktive Anordnungen, die ungefähr einen Wirkungsgrad bis zu 60% erreichen. Der hohe Wirkungsgrad entsteht unter anderem dadurch, dass der magnetische Fluss präzise von der primären in die sekundäre Wicklung 5,6 geleitet wird. Des Weiteren entstehen keine wesentlichen Streuverluste während der Durchleitung des magnetischen Flusses durch die beiden anliegenden Schutzschichten 11',11", da diese zum einen aus einem nicht elektrisch leitenden Material bestehen und zum anderen sehr dünn ausgebildet sind.

Damit jedoch die Kochplatte 1 beziehungsweise der Boden des Behältnisses 2 aufgrund von auftretenden Druck- und Zugspannungsverteilungen durch den Erwärmungsvorgang mechanisch ausreichend stabil bleiben, weisen das Vergussmittel 10',10" sowie die Schutzschicht 11',11" einen thermischen Ausdehnungskoeffizienten auf, der im Wesentlichen dem des Wicklungskörpers 8',8" entspricht. Der aus Ferrit bestehende Wicklungskörpers 8',8" kann beispielsweise einen thermischen Ausdehnungskoeffizienten von circa 10 ppm/K aufweisen. Die Anpassung des thermischen Ausdehnungskoeffizienten des Vergussmittels 10',10" an den des Wicklungskörpers 8',8" kann durch Hinzugabe von geeigneten Füllstoffen erfolgen. Die Füllstoffe können zum Beispiel Partikel oder Fasern sein, die mit dem Vergussmittel 10',10" vermischt werden. Im vorliegenden Ausführungsbeispiel sind die Füllstoffe kleine Keramikkügelchen, die in dem Vergussmittel 10',10" eingebunden sind. Während der Erwärmung des im Behältnis sich befindenden Gutes dehnen sich der Wicklungskörper 8',8", das Vergussmittel 10',10" sowie die Schutzschicht 11',11" gleichmäßig aus, ohne dass Rissbildungen durch Wärmespannungen entstehen. Insbesondere die Anpassung des thermischen Ausdehnungskoeffizienten der Schutzschicht 11',11" ist wichtig, da diese aufgrund ihrer geringen Dicke besonders empfindlich ist. In der dargestellten Ausführung der Erfindung bezieht sich die Anpassung des thermischen Ausdehnungskoeffizienten des Vergussmittels 10',10" und des der Schutzschicht 11',11" an den thermischen Ausdehnungskoeffizienten des Wicklungskörpers 8',8" für den Temperaturbereich von circa -20°C bis 150°C.

In einer weiteren nicht dargestellten Ausführungsform kann sich die Erfindung auf eine Vorrichtung 2, in der Speisen mittels Induktion erwärmbar sind, mit mindestens einer aus einem Stromleiter geformten sekundären Wicklung 6, an die mindestens ein Heizelement 7 angeschlossen ist, beziehen, wobei die sekundäre Wicklung 6 in einem Wicklungskörper 8" durch ein Vergussmittel 10" eingegossen ist und das isolierende Vergussmittel 10" einen thermischen Ausdehnungskoeffizienten besitzt, der im Wesentlichen dem des Wicklungskörpers 8" entspricht. Die Vorrichtung 1 zur Übertragung von Energie in die Vorrichtung 2 zum Erwärmen von Speisen mittels Induktion ist mit einer aus einem Stromleiter geformten und mit einer Spannungsquelle verbundenen primären Wicklung 5 ausgebildet, die in einem Wicklungskörper 8' durch ein Vergussmittel 10' eingegossen ist, wobei das isolierende Vergussmittel 10' einen thermischen Ausdehnungskoeffizienten besitzt, der im Wesentlichen dem des Wicklungskörpers 8' entspricht. Der Unterschied zur dargestellten Ausführungsform ist lediglich, dass der thermische Ausdehnungskoeffizient des Vergussmittels 10',10" dem des Wicklungskörpers 8',8" entspricht. Eine Schutzschicht 11',11" gemäß dem dargestellten Ausführungsbeispiel ist hierbei nicht am Wicklungskörper 8',8" angeordnet. Die übrigen Ausgestaltungen, insbesondere hinsichtlich des Wicklungskörpers 8',8", des Vergussmittels 10',10", der primären und der sekundären Wicklung 5,6 sowie des Heizelementes 7 entsprechen' den dargestellten Vorrichtungen 1,2, so dass, um Wiederholungen zu vermeiden, lediglich Bezug auf diese genommen wird.

Ferner kann bei der Vorrichtung 2 zum Erwärmen von Speisen sowie bei der Vorrichtung 1 zur Übertragung von Energie die primäre und die sekundäre Wicklung 5,6 in einem Wicklungskörper 8',8" angeordnet sein, wobei auf dem Wicklungskörper 8',8" eine nicht elektrisch leitende Schutzschicht 11',11" mit einer geringen Dicke angeordnet ist, die einen thermischen Ausdehnungskoeffizienten aufweist, der im Wesentlichen dem des Wicklungskörpers 8',8" entspricht. Diese Ausführungsform zeichnet sich dadurch aus, dass lediglich der thermische Ausdehnungskoeffizient der Schutzschicht 11',11" und nicht der des Vergussmittels 10',10" im Wesentlichen dem thermischen Ausdehnungskoeffizienten des aus Ferrit bestehenden Wicklungskörper 8',8" entspricht. Hinsichtlich der übrigen Ausgestaltungen der Vorrichtungen 1,2 wird auf die bereits beschriebenen Ausführungsformen gemäß Figur 1 und 2 Bezug genommen.

Bezugszeichenliste
1. Vorrichtung zur Übertragung von Energie, Kochplatte
2. Vorrichtung, in der Speisen erwärmbar sind, Behältnis
3. Rahmen
4. Rahmen
5. primäre Wicklung
6. sekundäre Wicklung
7. Heizelement

8' Wicklungskörper

8" Wicklungskörper

9' Ausnehmung

9" Ausnehmung

10' Vergussmittel

10" Vergussmittel

11' Schutzschicht

11" Schutzschicht

## Patentansprüche

1. Vorrichtung (1) zur Übertragung von Energie in eine Vorrichtung (2) zum Erwärmen von Speisen mittels Induktion mit einer aus einem Stromleiter geformten und mit einer Spannungsquelle verbundenen primären Wicklung (5), **dadurch gekennzeichnet, dass** die primäre Wicklung (5) in einem Wicklungskörper (8') durch ein Vergussmittel (10') eingegossen ist, und dass das isolierende Vergussmittel (10') einen thermischen Ausdehnungskoeffizienten besitzt, der im Wesentlichen dem des Wicklungskörpers (8') entspricht.

2. Vorrichtung (1) nach Anspruch 1, **dadurch gekennzeichnet, dass** auf dem Wicklungskörper (8') eine elektrisch nicht leitende Schutzschicht (11') mit einer geringen Dicke angeordnet ist, die einen thermischen Ausdehnungskoeffizienten besitzt, der im Wesentlichen dem des Wicklungskörpers (8') entspricht.

3. Vorrichtung (1) zur Übertragung von Energie in eine Vorrichtung (2) zum Erwärmen von Speisen mittels Induktion mit einer aus einem Stromleiter geformten und mit einer Spannungsquelle verbundenen primären Wicklung (5), **dadurch gekennzeichnet, dass** die primäre Wicklung (5) in einem Wicklungskörper (8') angeordnet ist, und dass auf dem Wicklungskörper (8') eine elektrisch nicht leitende Schutzschicht (11') mit einer geringen Dicke angeordnet ist, die einen thermischen Ausdehnungskoeffizienten besitzt, der im Wesentlichen dem des Wicklungskörpers (8') entspricht.

4. Vorrichtung (2), in der Speisen mittels induktiver Kopplung mittels einer Vorrichtung gemäß einem der Ansprüche 1 bis 3 erwärmbar sind, mit mindestens einer aus einem Stromleiter geformten sekundären Wicklung (6), an die mindestens ein Heizelement (7) angeschlossen ist, **dadurch gekennzeichnet, dass** die sekundäre Wicklung (6) in einem Wicklungskörper (8'') durch ein Vergussmittel (10'') eingegossen ist, und dass das isolierende Vergussmittel (10'') einen thermischen Ausdehnungskoeffizienten besitzt, der im Wesentlichen dem des Wicklungskörpers (8'') entspricht.

5. Vorrichtung (2), in der Speisen mittels induktiver Kopplung mittels einer Vorrichtung gemäß einem der Ansprüche 1 bis 3 erwärmbar sind, mit mindestens einer aus einem Stromleiter geformten sekundären Wicklung (6), an die mindestens ein Heizelement (7) angeschlossen ist, **dadurch gekennzeichnet, dass** die sekundäre Wicklung (6) in einem Wicklungskörper (8'') angeordnet ist, und dass auf dem Wicklungskörper (8'') eine elektrisch nicht leitende Schutzschicht (11') mit einer geringen Dicke angeordnet ist, die einen thermischen Ausdehnungskoeffizienten besitzt, der im Wesentlichen dem des Wicklungskörpers (8'') entspricht.

6. Vorrichtung (1,2) nach einem der genannten Ansprüche, **dadurch gekennzeichnet, dass** der Wicklungskörper (8',8'') aus Ferrit besteht.

7. Vorrichtung (1,2) nach einem der genannten Ansprüche, **dadurch gekennzeichnet, dass** der thermische Ausdehnungskoeffizient der Schutzschicht (11' ,11'') und/oder des Vergussmittels (10' ,10'') dem thermischen Ausdehnungskoeffizienten des Wicklungskörpers (8' ,8'') für einen Temperaturbereich von 20° C bis 150° C angepasst ist.

8. Vorrichtung (1,2) nach einem der genannten Ansprüche, **dadurch gekennzeichnet, dass** der Wicklungskörper (8 ' ,8'') mit einer Ausnehmung (9' ,9'') ausgebildet ist, in der die primäre oder die sekundäre Wicklung (5,6) angeordnet ist.

9. Vorrichtung (1,2) nach einem der genannten Ansprüche, **dadurch gekennzeichnet, dass** der Wicklungskörper (8 ' ,8'') rotationssymmetrisch ausgestaltet ist.

10. Vorrichtung (1,2) nach einem der genannten Ansprüche, **dadurch gekennzeichnet, dass** die Schutzschicht (11',11'') eine hohe Werkstoffhärte aufweist.

11. Vorrichtung (1,2) nach einem der genannten Ansprüche, **dadurch gekennzeichnet, dass** die Schutzschicht (11',11'') eine amorphe Kohlenwasserstoffschicht ist.

12. Vorrichtung (1,2) nach einem der genannten Ansprüche, **dadurch gekennzeichnet, dass** die Schutzschicht (11',11'') eine Dicke von maximal 500 *µ*m aufweist.

13. Vorrichtung (1,2) nach einem der genannten Ansprüche, **dadurch gekennzeichnet, dass** das Vergussmittel (10',10'') Epoxydharz oder Polyamid umfasst.

14. Vorrichtung (1,2) nach einem der genannten Ansprüche, **dadurch gekennzeichnet, dass** das Vergussmittel (10',10'') Füllstoffe insbesondere aus Keramik aufweist.

15. Vorrichtung (2) nach einem der genannten Ansprüche, **dadurch gekennzeichnet, dass** das Heizelement (7) mindestens einen Heizleiter aufweist, der einen mäanderförmigen oder einen bifilar spiralförmigen Verlauf hat.

16. Vorrichtung (2) nach einem der genannten Ansprüche, **dadurch gekennzeichnet, dass** zwischen der sekundären Wicklung (6) und dem Heizelement (7) eine Wärmeisolierung angeordnet ist.

17. Vorrichtung (2) nach Anspruch 16, **dadurch gekennzeichnet, dass** die Wärmeisolierung Vermiculit aufweist.

18. Vorrichtung (2) nach einem der genannten Ansprüche, **dadurch gekennzeichnet, dass** die Schutzschicht (11'') eine Folie ist, die am Wicklungskörper (8'') angeordnet ist.

19. Vorrichtung (2) nach einem der genannten Ansprüche, **dadurch gekennzeichnet, dass** die Schutzschicht (11'') aus Keramik oder Polytetrafluoroethylen (PTFE) besteht.

## Claims

1. Device (1) for transmission of energy to a device (2) for heating foodstuffs by means of induction, with a primary winding (5) formed from a current conductor and connected with a voltage source, **characterised in that** the primary winding (5) is encapsulated in a winding body (8') by an encapsulating means (10') and that the insulating encapsulating means (10') has a thermal coefficient of expansion substantially corresponding with that of the winding body (8').

2. Device (1) according to claim 1, **characterised in that** an electrically non-conductive protective layer (11') with a small thickness is arranged on the winding body (8') and has a thermal coefficient of expansion substantially corresponding with that of the winding body (8').

3. Device (1) for transmission of energy to a device (2) for heating foodstuffs by means of induction, with a primary winding (5) formed from a current conductor and connected with a voltage source, **characterised in that** the primary winding (5) is arranged in a winding body (8') and that an electrically non-conductive protective layer (11') with a small thickness is arranged on the winding body (8') and has a thermal coefficient of expansion substantially corresponding with that of the winding body (8').

4. Device (2), in which foodstuffs are heatable by means of conductive coupling by way of a device according to one of claims 1 to 3, with at least one secondary winding (6) which is formed from a current conductor and with which at least one heating element (7) is connected, **characterised in that** the secondary winding (6) is encapsulated in a winding body (8") by an encapsulating means (10") and that the insulating encapsulating means (10") has a thermal coefficient of expansion substantially corresponding with that of the winding body (8").

5. Device (2), in which foodstuffs are heatable by means of conductive coupling by way of a device according to one of claims 1 to 3, with at least one secondary winding (6) which is formed from a current conductor and with which at least one heating element (7) is connected, **characterised in that** the secondary winding (6) is arranged in a winding body (8") and that an electrically non-conductive protective layer (11") with a small thickness is arranged on the winding body (8") and has a thermal coefficient of expansion substantially corresponding with that of the winding body (8").

6. Device (1, 2) according to one of the said claims, **characterised in that** the winding body (8;, 8") consists of ferrite.

7. Device (1, 2) according to one of the said claims, **characterised in that** the thermal coefficient of expansion of the protective layer (11', 11") and or of the encapsulating means (10', 10") is matched to the thermal coefficient of expansion of the winding body (8', 8") for a temperature range of 20° C to 150° C.

8. Device (1, 2) according to one of the said claims, **characterised in that** the winding body (8', 8") is constructed with a recess (9', 9") in which the primary or secondary winding (5, 6) is arranged.

9. Device (1, 2) according to one of the said claims, **characterised in that** the winding body (8', 8") is formed to be rotationally symmetrical.

10. Device (1, 2) according to one of the said claims, **characterised in that** the protective layer (11', 11") has a high material hardness.

11. Device (1, 2) according to one of the said claims, **characterised in that** the protective layer (11', 11") is an amorphous hydrocarbon layer.

12. Device (1, 2) according to one of the said claims, **characterised in that** the protective layer (11', 11") has a thickness of at most 500 microns.

13. Device (1, 2) according to one of the said claims, **characterised in that** the encapsulating means (10', 10") comprises epoxy resin or polyamide.

14. Device (1, 2) according to one of the said claims, **characterised in that** the encapsulating means (10', 10") comprises fillers, particularly of ceramic.

15. Device (2) according to one of the said claims, **characterised in that** the heating element (7) comprises at least one heat conductor which has a meandering or a bifilar spiral course.

16. Device (2) according to one of the said claims, **characterised in that** a thermal insulation is arranged between the secondary winding (6) and the heating element (7).

17. Device (2) according to claim 16, **characterised in that** heat insulating comprises a vermiculite.

18. Device (2) according to one of the said claims, **characterised in that** the protective layer (11") is a film arranged at the winding body (8").

19. Device (2) according to one of the said claims, **characterised in that** the protective layer (11") consists of ceramic or polytetrafluoroethylene (PTFE).

## Revendications

1. Dispositif (1) pour le transfert d'énergie dans un dispositif (2) pour le réchauffement de plats par induction avec un enroulement primaire (5) formé d'un conducteur électrique et relié à une source de tension, **caractérisé en ce que** l'enroulement primaire (5) est coulé dans un corps d'enroulement (8') par un agent de scellement (10') et **en ce que** l'agent de scellement (10') isolant présente un coefficient de dilatation thermique qui correspond sensiblement à celui du corps d'enroulement (8').

2. Dispositif (1) selon la revendication 1, **caractérisé en ce qu'**une couche de protection (11') électriquement non conductrice avec une faible épaisseur est disposée sur le corps d'enroulement (8'), laquelle couche présente un coefficient de dilatation thermique qui correspond sensiblement à celui du corps d'enroulement (8').

3. Dispositif (1) pour le transfert d'énergie dans un dispositif (2) pour le réchauffement de plats par induction avec un enroulement primaire (5) formé d'un conducteur de courant et relié à une source de tension, **caractérisé en ce que** l'enroulement primaire (5) est disposé dans le corps d'enroulement (8'), et **en ce que** sur le corps d'enroulement (8') est disposée une couche de protection (11') électriquement non conductrice avec une faible épaisseur, qui présente un coefficient de dilatation thermique correspondant sensiblement à celui du corps d'enroulement (8').

4. Dispositif (2), dans lequel des plats peuvent être réchauffés par couplage inductif au moyen d'un dispositif selon l'une quelconque des revendications 1 à 3, comprenant au moins un enroulement secondaire (6) formé d'un conducteur électrique, enroulement auquel est raccordé au moins un élément de chauffage (7), **caractérisé en ce que** l'enroulement secondaire (6) est coulé dans un corps d'enroulement (8") par un agent de scellement (10"), et **en ce que** l'agent de scellement (10") isolant présente un coefficient de dilatation thermique qui correspond sensiblement à celui du corps d'enroulement (8").

5. Dispositif (2), dans lequel des plats peuvent être réchauffés par couplage inductif au moyen d'un dispositif selon l'une quelconque des revendications 1 à 3, comprenant au moins un enroulement secondaire (6) formé d'un conducteur de courant, enroulement auquel est raccordé au moins un élément de chauffage (7), **caractérisé en ce que** l'enroulement secondaire (6) est disposé dans un corps d'enroulement (8"), et **en ce que** sur le corps d'enroulement (8") est disposée une couche de protection (11 ") électriquement non conductrice avec une faible épaisseur, qui présente un coefficient de dilatation thermique correspondant sensiblement à celui du corps d'enroulement (8").

6. Dispositif (1, 2) selon l'une quelconque des revendications précédentes, **caractérisé en ce que** le corps d'enroulement (8', 8") est à base de ferrite.

7. Dispositif (1, 2) selon l'une quelconque des revendications précédentes, **caractérisé en ce que** le coefficient de dilatation thermique de la couche de protection (11', 11") et/ou de l'agent de scellement (10', 10") est adapté au coefficient de dilatation thermique du corps d'enroulement (8', 8") pour une plage de températures de 20°C à 150°C.

8. Dispositif (1, 2) selon l'une quelconque des revendications précédentes, **caractérisé en ce que** le corps d'enroulement (8', 8") est réalisé avec un évidement (9', 9") dans lequel est disposé l'enroulement primaire ou secondaire (5, 6).

9. Dispositif (1, 2) selon l'une quelconque des revendications précédentes, **caractérisé en ce que** le corps d'enroulement (8', 8") est conçu symétrique en rotation.

10. Dispositif (1, 2) selon l'une quelconque des revendications précédentes, **caractérisé en ce que** la couche de protection (11', 11 ") présente une dureté de matériau élevée.

11. Dispositif (1, 2) selon l'une quelconque des revendications précédentes, **caractérisé en ce que** la couche de protection (11', 11") est une couche hydrocarburée amorphe.

12. Dispositif (1, 2) selon l'une quelconque des revendications précédentes, **caractérisé en ce que** la couche de protection (11', 11 ") présente une épaisseur maximale de 500 µm.

13. Dispositif (1, 2) selon l'une quelconque des revendications précédentes, **caractérisé en ce que** l'agent de scellement (10', 10") comprend de la résine époxy ou du polyamide.

14. Dispositif (1, 2) selon l'une quelconque des revendications précédentes, **caractérisé en ce que** l'agent de scellement (10', 10") présente des matières de charge, en particulier à base de céramique.

15. Dispositif (2) selon l'une quelconque des revendications précédentes, **caractérisé en ce que** l'élément de chauffage (7) présente au moins un conducteur chauffant qui a un tracé en forme de méandre ou un tracé en forme de spirale bifilaire.

16. Dispositif (2) selon l'une quelconque des revendications précédentes, **caractérisé en ce qu'**une isolation thermique est disposée entre l'enroulement secondaire (6) et l'élément chauffant (7).

17. Dispositif (2) selon la revendication 16, **caractérisé en ce que** l'isolation thermique présente de la vermiculite.

18. Dispositif (2) selon l'une quelconque des revendications précédentes, **caractérisé en ce que** la couche de protection (11") est un film qui est disposé sur le corps d'enroulement (8")

19. Dispositif (2) selon l'une quelconque des revendications précédentes, **caractérisé en ce que** la couche de protection (11") est à base de céramique ou de polytétrafluoréthylène (PTFE).
